# EUROPÄISCHE PATENTSCHRIFT

(11) **EP 4 497 318 B1**
(45) Veröffentlichungstag und Bekanntmachung des Hinweises auf die Patenterteilung: **15.07.2026**
(21) Anmeldenummer: 24176964.5
(22) Anmeldetag: 21.05.2024
(51) Int. Cl.: A01D 41/127, A01B 69/04, G06Q 50/02

(54) **LANDWIRTSCHAFTLICHE ARBEITSMASCHINE MIT EINEM SPRACHAUTOMATEN**
AGRICULTURAL MACHINE WITH A SPEECH MACHINE
MACHINE AGRICOLE AVEC UN AUTOMATE VOCAL

(30) Priorität: 28.07.2023 DE 102023120113
(43) Veröffentlichungstag der Anmeldung: 29.01.2025
(73) Patentinhaber: CLAAS E-Systems GmbH, 49201 Dissen (DE)
(72) Erfinder: Reinecke, Max, 33775 Versmold (DE); Weichert, Arne, 49324 Melle (DE); Ossenbrink, Nils, 49084 Osnabrück (DE); Kemme, Sebastian, 49134 Wallenhorst (DE)
(74) Vertreter: CLAAS Gruppe

(56) Entgegenhaltungen:
- CN-A- 107 256 579
- DE-A1- 102004 042 865
- DE-A1- 102015 225 135
- RU-C2- 2 471 246
- US-B2- 10 462 957

## Beschreibung

Die vorliegende Erfindung betrifft eine landwirtschaftliche Arbeitsmaschine für einen landwirtschaftlichen Einsatz auf einem landwirtschaftlichen Feld, wobei diese Arbeitsmaschine eine Fahrerkabine für einen Fahrer aufweist.

Aus der DE 10 2021 119 454 A1 ist bekannt, dass einem Fahrer einer landwirtschaftlichen Erntemaschine Ausgabenachrichten in Form von Audionachrichten bereitgestellt werden. Solche Audionachrichten können für einen ersten Fahrer wichtig und relevant sein, während diese identischen Audionachrichten für einen zweiten Fahrer zum größten Teil irrelevant sind, sodass dessen Aufmerksamkeit bezüglich dieser Audionachrichten insgesamt sinkt.

Aus der RU 2 471 246 C2 ist bekannt, dass einem Fahrer einer landwirtschaftlichen Arbeitsmaschine beim Betreten der Fahrerkabine eine auf seine Bedürfnisse zugeschnittene, vorbestimmte akustische Demonstration von Arbeitsinformationen vorgespielt wird.

Der vorliegenden Erfindung liegt die Aufgabe zugrunde, eine verbesserte Ausführungsform einer landwirtschaftlichen Arbeitsmaschine anzugeben, sodass die Aufmerksamkeit eines des Fahrers bezüglich akustischer Sprachausgaben verbessert wird.

Diese Aufgabe wird erfindungsgemäß durch die Gegenstände der unabhängigen Ansprüche gelöst. Vorteilhafte Ausführungsformen sind Gegenstand der abhängigen Ansprüche. Die vorliegende Erfindung beruht auf dem allgemeinen Gedanken, dass nicht beliebige, sondern lediglich für einen Fahrer bevorzugte Informationen bezüglich der landwirtschaftlichen Arbeitsmaschine mit einem Sprachautomaten in eine akustische Sprachausgaben umgewandelt werden.

Die erfindungsgemäße landwirtschaftliche Arbeitsmaschine ist zum landwirtschaftlichen Einsatz auf einem landwirtschaftlichen Feld ausgebildet und weist eine Fahrerkabine für einen Fahrer der landwirtschaftlichen Arbeitsmaschine auf. Diese landwirtschaftliche Arbeitsmaschine kann ein selbstfahrender Mähdrescher, ein selbstfahrender Feldhäcksler oder ein Traktor sein.

Die Fahrerkabine der landwirtschaftlichen Arbeitsmaschine ist zur Erfassung, insbesondere messtechnischen Erfassung, einer Fahreridentifikation bezüglich des in der Fahrerkabine befindlichen Fahrers vorgesehen und eingerichtet ist. Die Fahreridentifikation kann eine datentechnisch gespeicherte Identifikation bezüglich des Fahrers ausbilden.

Die Fahrerkabine weist wenigstens einen Sprachautomaten auf, der dazu vorgesehen und eingerichtet ist, einen Text, insbesondere einen datentechnisch hinterlegten Text, in eine akustische Sprachausgabe bzw. eine Audionachricht innerhalb der Fahrerkabine umzuwandeln.

In einem, insbesondere computerlesbaren, Datenspeicher sind verschiedene Einstellungsparameter der landwirtschaftlichen Arbeitsmaschine mit verschiedenen Fahreridentifikationen verknüpft und hinterlegt, insbesondere datentechnisch verknüpft und datentechnisch hinterlegt, wobei diese Einstellungsparameter umfassen, welche Informationen bezüglich der landwirtschaftlichen Arbeitsmaschine mit dem Sprachautomat jeweils in eine akustische Sprachausgabe umgewandelt werden sollen.

Die landwirtschaftliche Arbeitsmaschine weist eine Einstellvorrichtung auf, die dazu vorgesehen und eingerichtet ist, mittels der Fahrerkabine eine Fahreridentifikation durchzuführen und in Abhängigkeit dieser Fahreridentifikation die im Datenspeicher hiermit verknüpften Einstellungsparameter zu ermitteln, um die landwirtschaftliche Arbeitsmaschine in Abhängigkeit der ermittelten Einstellungsparameter derart einzustellen, dass lediglich Texte bezüglich der im ermittelten Einstellungsparameter hinterlegten Informationen mit dem Sprachautomaten in akustische Sprachausgaben umgewandelt werden. Mit anderen Worten ausgedrückt, werden Texte bezüglich anderer, also bezüglich nicht ermittelter Einstellungsparameter hinterlegten Informationen, nicht in akustische Sprachausgaben umgewandelt.

Somit können für unterschiedliche Fahrer, die mit denen unterschiedliche Fahreridentifikationen verbunden sind, unterschiedliche Informationen mit dem Sprachautomaten in akustische Sprachausgaben umgewandelt werden. Hierdurch wird die Aufmerksamkeit des Fahrers bezüglich akustischer Sprachausgaben verbessert, da für den Fahrer irrelevante Informationen in Form von akustischen Sprachausgaben entgegengewirkt wird.

Im Datenspeicher können datentechnisch jeweils Texte zu verschiedenen Einstellungsparameter hinterlegt sein. Diese Texte können die hinterlegten Informationen, wie beispielweise Messwerte und/oder Einstellungswerte und/oder Betriebsinformationswerte, umfassen. Der Sprachautomat kann wenigstens einen Lautsprecher aufweisen, der aus einem Eingangssignal, welches den Text bezüglich der im ermittelten Einstellungsparameter hinterlegten Informationen umfasst, entsprechenden Schall erzeugt, der für den Fahrer in der Fahrerkabine hörbar ist.

Die Einstellvorrichtung kann als Steuer- und/oder Regelvorrichtung ausgebildet sein, die eine Einstellung durch eine Steuerung und/oder Regelung der landwirtschaftlichen Arbeitsmaschine, insbesondere von Komponenten der landwirtschaftlichen Arbeitsmaschine, bewirkt. Die Einstellvorrichtung kann eine Rechenvorrichtung und einen Datenspeicher aufweisen. Unter eingerichtet kann zu verstehen sein, dass die Einstellvorrichtung dazu ausgebildet und/oder programmiert ist. Die Einstellvorrichtung kann datentechnisch kommunizierend mit dem Datenspeicher, mit dem Sprachautomaten und/oder mit der Fahrerkabine verbunden sein.

Bei einer vorteilhaften Weiterbildung der erfindungsgemäßen Lösung ist vorgesehen, dass die Einstellvorrichtung dazu vorgesehen und eingerichtet ist, den Sprachautomaten und weitere Komponenten der landwirtschaftlichen Arbeitsmaschine automatisch einzustellen. Hierdurch wird ein automatischer Fahrbetrieb der bemannten landwirtschaftliche Arbeitsmaschine ermöglicht. In diesem automatischen Betriebsmodus werden dem Fahrer verschiedene Informationen über den Sprachautomaten bzw. das Audio-System bereitgestellt, sodass der Fahrer in der Fahrerkabine beispielweise an seinem Laptop arbeiten kann und nicht ständig hochgucken muss, ob alles im Normalbetrieb läuft, da der Fahrer in kritischen Situationen entsprechende Informationen über die Lautsprecher des Sprachautomaten erhält.

Bei einer vorteilhaften Weiterbildung der erfindungsgemäßen Lösung ist vorgesehen, dass eine weitere Komponente der landwirtschaftlichen Arbeitsmaschine eine Klimaanlagenvorrichtung zur Klimatisierung der Fahrerkabine ist.

Bei einer vorteilhaften Weiterbildung der erfindungsgemäßen Lösung ist vorgesehen, dass eine weitere Komponente der landwirtschaftlichen Arbeitsmaschine ein Radiogerät ist.

Bei einer vorteilhaften Weiterbildung der erfindungsgemäßen Lösung ist vorgesehen, dass eine weitere Komponente der landwirtschaftlichen Arbeitsmaschine für den Fahrer, insbesondere innerhalb der Fahrerkabine, visuell und/oder haptisch erfassbare Informationen erzeugt.

Bei einer vorteilhaften Weiterbildung der erfindungsgemäßen Lösung ist vorgesehen, dass eine weitere Komponente der landwirtschaftlichen Arbeitsmaschine eine Fahrersitz-Einstellvorrichtung zur Einstellung eines verstellbaren Fahrersitzes ist, wobei der verstellbare Fahrersitz in der Fahrerkabine angeordnet ist.

Bei einer vorteilhaften Weiterbildung der erfindungsgemäßen Lösung ist vorgesehen, dass eine weitere Komponente der landwirtschaftlichen Arbeitsmaschine eine Tastenbelegung eines Eingabegerätes ist, mit welchem der Fahrer die landwirtschaftlichen Arbeitsmaschine einstellen kann, wobei dieses Eingabegerät in der Fahrerkabine angeordnet ist.

Bei einer vorteilhaften Weiterbildung der erfindungsgemäßen Lösung ist vorgesehen, dass die Einstellvorrichtung dazu vorgesehen und eingerichtet ist, die landwirtschaftliche Arbeitsmaschine in Abhängigkeit sensortechnisch erfasster Betriebsparameter und satellitenbasierten Positionsinformationen derart einzustellen, dass die landwirtschaftliche Arbeitsmaschine innerhalb des landwirtschaftlichen Feldes einer vorgegebenen Fahrroute automatisch entlangfährt, wobei während dieses Betriebszustandes der landwirtschaftliche Arbeitsmaschine weiterhin lediglich Texte bezüglich der im ermittelten Einstellungsparameter hinterlegten Informationen mit dem Sprachautomaten in akustische Sprachausgaben umgewandelt werden.

Die satellitenbasierte Informationen können jeweils mittels einer Positionsbestimmungseinrichtung zur satellitenbasierten Erfassung einer Position einer landwirtschaftlichen Arbeitsmaschine bezüglich des landwirtschaftlichen Feldes erfasst worden sein. Die Positionsbestimmungseinrichtung kann zur Positionsbestimmung mittels Satellitennavigationssignalen ausgebildet und/oder programmiert sein, um beispielsweise Positionsdaten bereitzustellen. Hierbei kann wenigstens eine Satellitenvorrichtung zur Positionsbestimmung der landwirtschaftlichen Arbeitsmaschine bezüglich landwirtschaftlichen Feldes eingesetzt werden. Die Satellitenvorrichtung kann einen und/oder mehrere GNSS-Satelliten umfassen. Die Satellitenvorrichtung kann NAVSTAR-GPS-, GLONASS-, Galileo, Beidou-, GPS- und/oder Galileo-Satelliten umfassen. Die Positionsbestimmungseinrichtung kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal eingesetzt wird, um die Position der landwirtschaftlichen Arbeitsmaschine auf dem landwirtschaftlichen Feld zu ermitteln. Das RTK-Signal kann von einer stationären Bodenstation erzeugt werden. Das RTK-Signal kann von einem außerhalb der landwirtschaftlichen Arbeitsmaschine ausgebildeten computerbasierten Rechenzentrum erzeugt werden, welches Korrekturdaten computerbasiert berechnet und diese Korrekturdaten der Einstellvorrichtung der landwirtschaftlichen Arbeitsmaschine über Mobilfunk übermittelt. Hierbei kann die stationäre Bodenstation und/oder das computerbasierte Rechenzentrum außerhalb des landwirtschaftlichen Feldes angeordnet sein.

Bei einer vorteilhaften Weiterbildung der erfindungsgemäßen Lösung ist vorgesehen, dass der Text, der in eine akustische Sprachausgabe innerhalb der Fahrerkabine umgewandelt wird, für die Einstellvorrichtung in einem Datenspeicher innerhalb der landwirtschaftlichen Arbeitsmaschine hinterlegt ist, und/oder dass der Text, der in eine akustische Sprachausgabe innerhalb der Fahrerkabine umgewandelt wird, für die Einstellvorrichtung in einem Datenspeicher außerhalb der landwirtschaftlichen Arbeitsmaschine hinterlegt ist. Die Einstellvorrichtung kann mit dem Datenspeicher innerhalb der landwirtschaftlichen Arbeitsmaschine kabelgebunden und/oder kabellos kommunizierend verbunden sein. Die Einstellvorrichtung kann mit dem Datenspeicher außerhalb der landwirtschaftlichen Arbeitsmaschine kabellos kommunizierend verbunden sein.

Bei einer vorteilhaften Weiterbildung der erfindungsgemäßen Lösung ist vorgesehen, dass der Text, der in eine akustische Sprachausgabe innerhalb der Fahrerkabine umgewandelt wird, mehrere Textteile umfasst, wobei die Einstellvorrichtung diese Textteile aus mehreren datentechnischen Quellen bezieht, und/oder dass die Einstellvorrichtung dazu vorgesehen und eingerichtet ist, den Text, der in eine akustische Sprachausgabe innerhalb der Fahrerkabine umgewandelt wird, aus mehreren Textteilen, die von mehreren datentechnischen Quellen, insbesondere mehreren Datenspeichern, stammen, zu erzeugen.

Bei einer vorteilhaften Weiterbildung der erfindungsgemäßen Lösung ist vorgesehen, dass die Einstellvorrichtung dazu vorgesehen und eingerichtet ist, den Text, der in eine akustische Sprachausgabe innerhalb der Fahrerkabine umgewandelt wird, von einem Farmmanagementsystemen datentechnisch zu beziehen.

Bei einer vorteilhaften Weiterbildung der erfindungsgemäßen Lösung ist vorgesehen, dass die Einstellvorrichtung dazu vorgesehen und eingerichtet ist, den Text, der in eine akustische Sprachausgabe innerhalb der Fahrerkabine umgewandelt wird, von einem Task-Management-System datentechnisch zu beziehen.

Bei einer vorteilhaften Weiterbildung der erfindungsgemäßen Lösung ist vorgesehen, dass die Einstellvorrichtung dazu vorgesehen und eingerichtet ist, den Text, der in eine akustische Sprachausgabe innerhalb der Fahrerkabine umgewandelt wird, von einem Wetterdienst, insbesondere von einem Server eines Wetterdienstes, datentechnisch zu beziehen.

Bei einer vorteilhaften Weiterbildung der erfindungsgemäßen Lösung ist vorgesehen, dass die Einstellvorrichtung dazu vorgesehen und eingerichtet ist, den Text, der in eine akustische Sprachausgabe innerhalb der Fahrerkabine umgewandelt wird, von einem digitalen Handbuch datentechnisch zu beziehen.

Bei einer vorteilhaften Weiterbildung der erfindungsgemäßen Lösung ist vorgesehen, dass die Einstellvorrichtung dazu vorgesehen und eingerichtet ist, den Text, der in eine akustische Sprachausgabe innerhalb der Fahrerkabine umgewandelt wird, von einer Maschinendatenbank zu beziehen.

Bei einer vorteilhaften Weiterbildung der erfindungsgemäßen Lösung ist vorgesehen, dass die Einstellvorrichtung dazu vorgesehen und eingerichtet ist, den Text, der in eine akustische Sprachausgabe innerhalb der Fahrerkabine umgewandelt wird, mit satellitenbasierten Informationen zu verknüpfen.

Bei einer vorteilhaften Weiterbildung der erfindungsgemäßen Lösung ist vorgesehen, dass die Einstellvorrichtung dazu vorgesehen und eingerichtet ist, einen Namen des landwirtschaftlichen Feldes aus einem Task-Management-System zu ermitteln und hierauf basierend bezüglich dieses landwirtschaftlichen Feldes eine spezifische Wettervorhersage von einem Wetterdienst zu ermitteln, um für den Text, der in eine akustische Sprachausgabe innerhalb der Fahrerkabine umgewandelt wird, den Namen des landwirtschaftlichen Feldes und die dazugehörige Wettervorhersage miteinander zu verknüpfen.

Bei einer vorteilhaften Weiterbildung der erfindungsgemäßen Lösung ist vorgesehen, dass die Fahrerkabine der landwirtschaftlichen Arbeitsmaschine wenigstens eine Kameravorrichtung zur Erfassung der Fahreridentifikation bezüglich des in der Fahrerkabine befindlichen Fahrers aufweist ist, wobei die Fahreridentifikation ein digitales Kamerabild ist.

Bei einer vorteilhaften Weiterbildung der erfindungsgemäßen Lösung ist vorgesehen, dass dass die Einstellvorrichtung dazu vorgesehen und eingerichtet ist, während der akustischen Sprachausgaben des Sprachautomaten andere akustische Ausgaben weiterer akustischer Quellen, insbesondere eines Radios, innerhalb der Fahrerkabine lautstärketechnisch zu reduzieren und/oder zu verhindern.

Ferner betrifft die Erfindung die datentechnische, insbesondere computerimplementierte, Bereitstellung von Einstellungsparametern einer landwirtschaftlichen Arbeitsmaschine und damit verknüpften Fahreridentifikationen für eine Einstellvorrichtung der landwirtschaftlichen Arbeitsmaschine zur Einstellung von akustischen Sprachausgaben eines Sprachautomaten der landwirtschaftlichen Arbeitsmaschine. Hierbei kann die erfindungsgemäße landwirtschaftliche Arbeitsmaschine zuvor als auch nachfolgend beschriebene Merkmale aufweisen.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Ansprüche zu verlassen.

Ein bevorzugtes Ausführungsbeispiel der Erfindung ist in der Zeichnung dargestellt und wird in der nachfolgenden Beschreibung näher erläutert, wobei sich gleiche Bezugszeichen auf gleiche oder ähnliche oder funktional gleiche Komponenten beziehen.

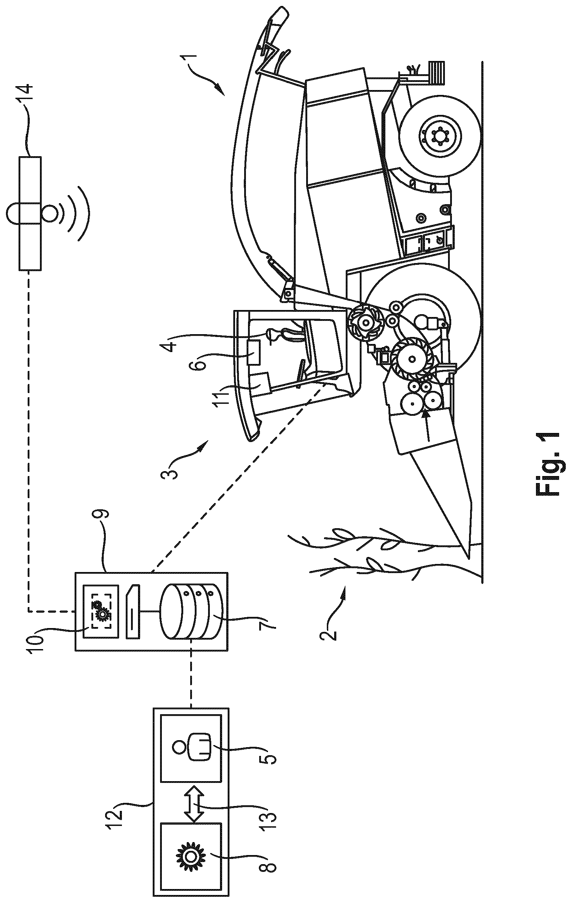

Fig. 1 zeigt eine erfindungsgemäße landwirtschaftliche Arbeitsmaschine 1 während eines landwirtschaftlichen Einsatzes auf einem landwirtschaftlichen Feld 2. Diese landwirtschaftliche Arbeitsmaschine 1 ist in der Fig. 1 beispielhaft als selbstfahrender Feldhäcksler dargestellt, kann jedoch als selbstfahrender Mähdrescher oder als Traktor mit einem Anbaugerät ausgebildet sein.

Die landwirtschaftliche Arbeitsmaschine 1 weist eine Fahrerkabine 3 für einen Fahrer 4 der landwirtschaftlichen Arbeitsmaschine 1 auf. Diese Fahrerkabine 3 ist zur Erfassung einer Fahreridentifikation 5, insbesondere in Form eines Datensatzes, bezüglich des in der Fahrerkabine 3 befindlichen Fahrers 4 vorgesehen und eingerichtet. Hierfür ist in der Fahrerkabine 3 der landwirtschaftlichen Arbeitsmaschine 1 wenigstens eine Kameravorrichtung 11 zur Erfassung dieser Fahreridentifikation 5 angeordnet, wobei die hierbei erzeugte Fahreridentifikation 5 ein digitales Kamerabild des Fahrers 4 ist.

Außerdem ist in der Fahrerkabine 3 wenigstens ein Sprachautomat 6 angeordnet, der dazu vorgesehen und eingerichtet ist, einen Text in eine Sprachausgabe innerhalb der Fahrerkabine 3 derart umzuwandeln, dass der Fahrer 4 den Text dieser Sprachausgabe akustische gut und deutlich erfassen kann.

Die landwirtschaftliche Arbeitsmaschine 1 weist eine Einstellvorrichtung 9 auf, die eine Einstellung durch eine Steuerung und/oder Regelung der landwirtschaftlichen Arbeitsmaschine 1, insbesondere von Komponenten der landwirtschaftlichen Arbeitsmaschine 1, ermöglicht. Die Einstellvorrichtung 9 weist eine Rechenvorrichtung 10 und einen internen Datenspeicher 7 und/oder einen nicht dargestellten externen Datenspeicher außerhalb der landwirtschaftliche Arbeitsmaschine 1 auf.

In dem Datenspeicher 7 sind verschiedene Einstellungsparameter 8 der landwirtschaftlichen Arbeitsmaschine 1 mit verschiedenen Fahreridentifikationen 5 in einem Datensatz 12 mittels einer datentechnischen Verknüpfung 13 gespeichert, wobei diese Einstellungsparameter 8 umfassen, welche Informationen bezüglich der landwirtschaftlichen Arbeitsmaschine 1 mit dem Sprachautomat 6 jeweils in eine akustische Sprachausgabe umgewandelt werden sollen.

Die Einstellvorrichtung 9 der landwirtschaftlichen Arbeitsmaschine 1 ist dazu vorgesehen und eingerichtet, mittels der Fahrerkabine 3 die Fahreridentifikation 5 durchzuführen und in Abhängigkeit dieser Fahreridentifikation 5 die im Datenspeicher 7 hiermit verknüpften Einstellungsparameter 8 zu ermitteln, um die landwirtschaftliche Arbeitsmaschine 1 in Abhängigkeit dieser ermittelten Einstellungsparameter 8 derart einzustellen, dass lediglich Texte bezüglich der im ermittelten Einstellungsparameter 8 hinterlegten Informationen mit dem Sprachautomaten 6 in akustische Sprachausgaben umgewandelt werden, während andere Text nicht mit dem Sprachautomaten 6 in akustische Sprachausgaben umgewandelt werden.

Somit können für unterschiedliche Fahrer 4, die mit denen unterschiedliche Fahreridentifikationen 5 verbunden sind, unterschiedliche Informationen mit dem Sprachautomaten 6 in akustische Sprachausgaben umgewandelt werden. Hierdurch wird die Aufmerksamkeit des Fahrers 4 bezüglich akustischer Sprachausgaben verbessert, da für den Fahrer 4 irrelevante Informationen in Form von akustischen Sprachausgaben entgegengewirkt wird.

Die Einstellvorrichtung 9 ist zusätzlich dazu vorgesehen und eingerichtet, neben dem Sprachautomaten 6 und auch weitere Komponenten der landwirtschaftlichen Arbeitsmaschine 1 automatisch einzustellen. Diese weiteren Komponenten sind in der Fig. 1 nicht dargestellt und können ein Radiogerät, eine Vorrichtung zur Erzeugung visuell und/oder haptisch erfassbarer Informationen, eine Fahrersitz-Einstellvorrichtung zur Einstellung eines verstellbaren Fahrersitzes und/oder eine Tastenbelegung eines Eingabegerätes sein.

Die Einstellvorrichtung 9 kann dazu vorgesehen und eingerichtet sein, die landwirtschaftliche Arbeitsmaschine 1 in Abhängigkeit sensortechnisch erfasster Betriebsparameter und satellitenbasierten Positionsinformationen, die mittels mehreren Satelliten 14 erfasst wurden, derart einzustellen, dass die landwirtschaftliche Arbeitsmaschine 1 innerhalb des landwirtschaftlichen Feldes 2 automatisch entlang einer vorgegebenen Fahrroute fährt, wobei während dieses automatischen Betriebszustandes der landwirtschaftliche Arbeitsmaschine 1 weiterhin lediglich Texte bezüglich der im ermittelten Einstellungsparameter 8 hinterlegten Informationen mit dem Sprachautomaten 6 in akustische Sprachausgaben umgewandelt werden. Während der akustischen Sprachausgaben des Sprachautomaten 6 können andere akustische Ausgaben weiterer nicht dargestellter akustischer Quellen innerhalb der Fahrerkabine 3 lautstärketechnisch reduziert werden.

Die Einstellvorrichtung 9 kann dazu vorgesehen und eingerichtet ist, einen Namen des landwirtschaftlichen Feldes 2 aus einem Task-Management-System zu ermitteln und hierauf basierend bezüglich dieses landwirtschaftlichen Feldes 2 eine spezifische Wettervorhersage von einem Wetterdienst zu ermitteln, um für den Text, der in eine akustische Sprachausgabe innerhalb der Fahrerkabine 3 umgewandelt wird, den Namen des landwirtschaftlichen Feldes 2 und die dazugehörige Wettervorhersage miteinander zu verknüpfen.

Durch die datentechnische Bereitstellung der Einstellungsparameter 8 der landwirtschaftlichen Arbeitsmaschine 1 und der damit datentechnisch verknüpften Fahreridentifikationen 5 wird ermöglicht, dass die Einstellvorrichtung 9 der landwirtschaftlichen Arbeitsmaschine 1 eine optimale Einstellung der akustischen Sprachausgaben des Sprachautomaten 6 bewirkt.

### Bezugszeichenliste

- 1: landwirtschaftliche Arbeitsmaschine
- 2: landwirtschaftliches Feld
- 3: Fahrerkabine
- 4: Fahrer
- 5: Fahreridentifikation
- 6: Sprachautomat
- 7: Datenspeicher
- 8: Einstellungsparameter
- 9: Einstellvorrichtung
- 10: Rechenvorrichtung
- 11: Kameravorrichtung
- 12: Datensatz
- 13: Datentechnische Verknüpfung
- 14: Satellit

## Patentansprüche

1. Landwirtschaftliche Arbeitsmaschine (1) zum landwirtschaftlichen Einsatz auf einem landwirtschaftlichen Feld (2),
- mit einer Fahrerkabine (3) für einen Fahrer (4) der landwirtschaftlichen Arbeitsmaschine (1),
- wobei die Fahrerkabine (3) der landwirtschaftlichen Arbeitsmaschine (1) zur Erfassung einer Fahreridentifikation (5) bezüglich eines in der Fahrerkabine (3) befindlichen Fahrers (4) vorgesehen und eingerichtet ist,
- wobei die Fahrerkabine (3) wenigstens einen Sprachautomaten (6) aufweist, der dazu vorgesehen und eingerichtet ist, einen Text in eine akustische Sprachausgabe innerhalb der Fahrerkabine (3) umzuwandeln,
**dadurch gekennzeichnet, dass** in einem Datenspeicher (7) verschiedene Einstellungsparameter (8) der landwirtschaftlichen Arbeitsmaschine (1) mit verschiedenen Fahreridentifikationen (5) verknüpft und hinterlegt sind, wobei diese Einstellungsparameter (8) umfassen, welche Informationen bezüglich der landwirtschaftlichen Arbeitsmaschine (1) mit dem Sprachautomat (6) jeweils in eine akustische Sprachausgabe umgewandelt werden sollen,
- wobei eine Einstellvorrichtung (9) der landwirtschaftlichen Arbeitsmaschine (1) dazu vorgesehen und eingerichtet ist, mittels der Fahrerkabine (3) eine Fahreridentifikation (5) durchzuführen und in Abhängigkeit dieser Fahreridentifikation (5) die im Datenspeicher (7) hiermit verknüpften Einstellungsparameter (8) zu ermitteln, um die landwirtschaftliche Arbeitsmaschine (1) in Abhängigkeit der ermittelten Einstellungsparameter (8) derart einzustellen, dass lediglich Texte bezüglich der im ermittelten Einstellungsparameter (8) hinterlegten Informationen mit dem Sprachautomaten (6) in akustische Sprachausgaben umgewandelt werden.

2. Landwirtschaftliche Arbeitsmaschine (1) nach Anspruch 1,
**dadurch gekennzeichnet,**
**dass** die Einstellvorrichtung (9) dazu vorgesehen und eingerichtet ist, den Sprachautomaten (6) und weitere Komponenten der landwirtschaftlichen Arbeitsmaschine (1) automatisch einzustellen.

3. Landwirtschaftliche Arbeitsmaschine (1) nach Anspruch 2,
**dadurch gekennzeichnet,**
**dass** eine weitere Komponente der landwirtschaftlichen Arbeitsmaschine (1) eine Klimaanlagenvorrichtung zur Klimatisierung der Fahrerkabine (3) ist.

4. Landwirtschaftliche Arbeitsmaschine (1) nach Anspruch 2 oder 3,
**dadurch gekennzeichnet,**
- **dass** eine weitere Komponente der landwirtschaftlichen Arbeitsmaschine (1) ein Radiogerät ist, und/oder
- **dass** eine weitere Komponente der landwirtschaftlichen Arbeitsmaschine (1) für den Fahrer (4) visuell und/oder haptisch erfassbare Informationen erzeugt.

5. Landwirtschaftliche Arbeitsmaschine (1) nach einem der Ansprüche 2 bis 4,
**dadurch gekennzeichnet,**
- **dass** eine weitere Komponente der landwirtschaftlichen Arbeitsmaschine (1) eine Fahrersitz-Einstellvorrichtung zur Einstellung eines verstellbaren Fahrersitzes ist,
- wobei der verstellbare Fahrersitz in der Fahrerkabine (3) angeordnet ist.

6. Landwirtschaftliche Arbeitsmaschine (1) nach einem der Ansprüche 2 bis 5,
**dadurch gekennzeichnet,**
- **dass** eine weitere Komponente der landwirtschaftlichen Arbeitsmaschine (1) eine Tastenbelegung eines Eingabegerätes ist, mit welchem der Fahrer (4) die landwirtschaftlichen Arbeitsmaschine (1) einstellen kann,
- wobei das Eingabegerät in der Fahrerkabine (3) angeordnet ist.

7. Landwirtschaftliche Arbeitsmaschine (1) nach einem der vorhergehenden Ansprüche, **dadurch gekennzeichnet,**
- **dass** die Einstellvorrichtung (9) dazu vorgesehen und eingerichtet ist, die landwirtschaftliche Arbeitsmaschine (1) in Abhängigkeit sensortechnisch erfasster Betriebsparameter und satellitenbasierten Positionsinformationen derart einzustellen, dass die landwirtschaftliche Arbeitsmaschine (1) innerhalb des landwirtschaftlichen Feldes (2) einer vorgegebenen Fahrroute automatisch entlangfährt,
- wobei während dieses Betriebszustandes der landwirtschaftliche Arbeitsmaschine (1) weiterhin lediglich Texte bezüglich der im ermittelten Einstellungsparameter (8) hinterlegten Informationen mit dem Sprachautomaten (6) in akustische Sprachausgaben umgewandelt werden.

8. Landwirtschaftliche Arbeitsmaschine (1) nach einem der vorhergehenden Ansprüche, **dadurch gekennzeichnet,**
- **dass** der Text, der in eine akustische Sprachausgabe innerhalb der Fahrerkabine (3) umgewandelt wird, für die Einstellvorrichtung (9) in einem Datenspeicher (7) innerhalb der landwirtschaftlichen Arbeitsmaschine (1) hinterlegt ist, und/oder
- **dass** der Text, der in eine akustische Sprachausgabe innerhalb der Fahrerkabine (3) umgewandelt wird, für die Einstellvorrichtung (9) in einem Datenspeicher außerhalb der landwirtschaftlichen Arbeitsmaschine (1) hinterlegt ist.

9. Landwirtschaftliche Arbeitsmaschine (1) nach einem der vorhergehenden Ansprüche, **dadurch gekennzeichnet,**
- **dass** der Text, der in eine akustische Sprachausgabe innerhalb der Fahrerkabine (3) umgewandelt wird, mehrere Textteile umfasst, wobei die Einstellvorrichtung (9) diese Textteile aus mehreren datentechnischen Quellen bezieht, und/oder
- **dass** die Einstellvorrichtung (9) dazu vorgesehen und eingerichtet ist, den Text, der in eine akustische Sprachausgabe innerhalb der Fahrerkabine (3) umgewandelt wird, aus mehreren Textteilen, die von mehreren datentechnischen Quellen stammen, zu erzeugen.

10. Landwirtschaftliche Arbeitsmaschine (1) nach einem der vorhergehenden Ansprüche, **dadurch gekennzeichnet,**
- **dass** die Einstellvorrichtung (9) dazu vorgesehen und eingerichtet ist, den Text, der in eine akustische Sprachausgabe innerhalb der Fahrerkabine (3) umgewandelt wird, von einem Farmmanagementsystemen datentechnisch zu beziehen, und/oder
- **dass** die Einstellvorrichtung (9) dazu vorgesehen und eingerichtet ist, den Text, der in eine akustische Sprachausgabe innerhalb der Fahrerkabine (3) umgewandelt wird, von einem Task-Management-System datentechnisch zu beziehen, und/oder
- **dass** die Einstellvorrichtung (9) dazu vorgesehen und eingerichtet ist, den Text, der in eine akustische Sprachausgabe innerhalb der Fahrerkabine (3) umgewandelt wird, von einem Wetterdienst datentechnisch zu beziehen, und/oder
- **dass** die Einstellvorrichtung (9) dazu vorgesehen und eingerichtet ist, den Text, der in eine akustische Sprachausgabe innerhalb der Fahrerkabine (3) umgewandelt wird, von einem Handbuch datentechnisch zu beziehen, und/oder
- **dass** die Einstellvorrichtung (9) dazu vorgesehen und eingerichtet ist, den Text, der in eine akustische Sprachausgabe innerhalb der Fahrerkabine (3) umgewandelt wird, von einer Maschinendatenbank zu beziehen, und/oder
- **dass** die Einstellvorrichtung (9) dazu vorgesehen und eingerichtet ist, den Text, der in eine akustische Sprachausgabe innerhalb der Fahrerkabine (3) umgewandelt wird, mit satellitenbasierten Informationen zu verknüpfen.

11. Landwirtschaftliche Arbeitsmaschine (1) nach einem der vorhergehenden Ansprüche,
**dadurch gekennzeichnet,**
**dass** die Einstellvorrichtung (9) dazu vorgesehen und eingerichtet ist, einen Namen des landwirtschaftlichen Feldes (2) aus einem Task-Management-System zu ermitteln und hierauf basierend bezüglich dieses landwirtschaftlichen Feldes (2) eine spezifische Wettervorhersage von einem Wetterdienst zu ermitteln, um für den Text, der in eine akustische Sprachausgabe innerhalb der Fahrerkabine (3) umgewandelt wird, den Namen des landwirtschaftlichen Feldes (2) und die dazugehörige Wettervorhersage miteinander zu verknüpfen.

12. Landwirtschaftliche Arbeitsmaschine (1) nach einem der vorhergehenden Ansprüche,
**dadurch gekennzeichnet,**
**dass** die Fahrerkabine (3) der landwirtschaftlichen Arbeitsmaschine (1) wenigstens eine Kameravorrichtung (11) zur Erfassung der Fahreridentifikation (5) bezüglich des in der Fahrerkabine (3) befindlichen Fahrers (4) aufweist ist.

13. Landwirtschaftliche Arbeitsmaschine (1) nach einem der vorhergehenden Ansprüche, **dadurch gekennzeichnet,**
- **dass** die Fahreridentifikation (5) ein digitales Kamerabild ist, und/oder
- **dass** die Einstellvorrichtung (9) dazu vorgesehen und eingerichtet ist, mittels des digitalen Kamerabildes eine Aufmerksamkeit des Fahrers (4) zu ermitteln und die akustische Sprachausgabe in Abhängigkeit dieser ermittelten Aufmerksamkeit vorzunehmen und/oder anzupassen, insbesondere zeitlich optimiert vorzunehmen und/oder anzupassen.

14. Landwirtschaftliche Arbeitsmaschine (1) nach einem der vorhergehenden Ansprüche, **dadurch gekennzeichnet,**
**dass** die Einstellvorrichtung (9) dazu vorgesehen und eingerichtet ist, während der akustischen Sprachausgaben des Sprachautomaten (6) andere akustische Ausgaben weiterer akustischer Quellen innerhalb der Fahrerkabine (3) lautstärketechnisch zu reduzieren und/oder zu verhindern.

15. Datentechnische Bereitstellung von Einstellungsparametern (8) einer landwirtschaftlichen Arbeitsmaschine (1) nach einem der vorhergehenden Ansprüche und damit verknüpften Fahreridentifikationen (5) für eine Einstellvorrichtung (9) der landwirtschaftlichen Arbeitsmaschine (1) zur Einstellung von akustischen Sprachausgaben eines Sprachautomaten (6) der landwirtschaftlichen Arbeitsmaschine (1).

## Claims

1. Agricultural work machine (1) for agricultural use in an agricultural field (2),
- having a driver's cab (3) for a driver (4) of the agricultural work machine (1),
- the driver's cab (3) of the agricultural work machine (1) being intended and configured to capture a driver identification (5) relating to a driver (4) who is in the driver's cab (3),
- the driver's cab (3) having at least one automated voice system (6) that is intended and configured to convert a text into an audible voice output inside the driver's cab (3),
**characterized**
**in that** various adjustment parameters (8) pertaining to the agricultural work machine (1) are associated with different driver identifications (5), and stored, in a data memory (7), these adjustment parameters (8) including what information relating to the agricultural work machine (1) is supposed to be converted into an audible voice output by the automated voice system (6) in each case,
- an adjustment device (9) of the agricultural work machine (1) being intended and configured to use the driver's cab (3) to provide a driver identification (5) and to take this driver identification (5) as a basis for determining the adjustment parameters (8) associated therewith in the data memory (7), in order to adjust the agricultural work machine (1) on the basis of the determined adjustment parameters (8) in such a way that only texts relating to the information stored in the determined adjustment parameter (8) are converted into audible voice outputs by the automated voice system (6).

2. Agricultural work machine (1) according to Claim 1,
**characterized**
**in that** the adjustment device (9) is intended and configured to adjust the automated voice system (6) and other components of the agricultural work machine (1) automatically.

3. Agricultural work machine (1) according to Claim 2,
**characterized**
**in that** another component of the agricultural work machine (1) is an air-conditioning device for air-conditioning the driver's cab (3).

4. Agricultural work machine (1) according to Claim 2 or 3,
**characterized**
- **in that** another component of the agricultural work machine (1) is a radio, and/or
- **in that** another component of the agricultural work machine (1) produces visually and/or haptically perceptible information for the driver (4).

5. Agricultural work machine (1) according to one of Claims 2 to 4,
**characterized**
- **in that** another component of the agricultural work machine (1) is a driver's seat adjustment device for adjusting an adjustable driver's seat,
- the adjustable driver's seat being arranged in the driver's cab (3).

6. Agricultural work machine (1) according to one of Claims 2 to 5,
**characterized**
- **in that** another component of the agricultural work machine (1) is a key assignment of an input device that the driver (4) can use to adjust the agricultural work machine (1),
- the input device being arranged in the driver's cab (3).

7. Agricultural work machine (1) according to one of the preceding claims,
**characterized**
- **in that** the adjustment device (9) is intended and configured to adjust the agricultural work machine (1) on the basis of sensor-acquired operating parameters and satellite-based position information in such a way that the agricultural work machine (1) travels along a predefined route of travel within the agricultural field (2) automatically,
- and during this operating state of the agricultural work machine (1), only texts relating to the information stored in the determined adjustment parameter (8) continue to be converted into audible voice outputs by the automated voice system (6).

8. Agricultural work machine (1) according to one of the preceding claims,
**characterized**
- **in that** the text converted into an audible voice output inside the driver's cab (3) is stored for the adjustment device (9) in a data memory (7) inside the agricultural work machine (1), and/or
- **in that** the text converted into an audible voice output inside the driver's cab (3) is stored for the adjustment device (9) in a data memory outside the agricultural work machine (1).

9. Agricultural work machine (1) according to one of the preceding claims,
**characterized**
- **in that** the text converted into an audible voice output inside the driver's cab (3) comprises multiple text portions, the adjustment device (9) obtaining these text portions from multiple data sources, and/or
- **in that** the adjustment device (9) is intended and configured to generate the text converted into an audible voice output inside the driver's cab (3) from multiple text portions that come from multiple data sources.

10. Agricultural work machine (1) according to one of the preceding claims,
**characterized**
- **in that** the adjustment device (9) is intended and configured to obtain the text converted into an audible voice output inside the driver's cab (3) from a farm management system by data processing means, and/or
- **in that** the adjustment device (9) is intended and configured to obtain the text converted into an audible voice output inside the driver's cab (3) from a task management system by data processing means, and/or
- **in that** the adjustment device (9) is intended and configured to obtain the text converted into an audible voice output inside the driver's cab (3) from a weather service by data processing means, and/or
- **in that** the adjustment device (9) is intended and configured to obtain the text converted into an audible voice output inside the driver's cab (3) from a manual by data processing means, and/or
- **in that** the adjustment device (9) is intended and configured to obtain the text converted into an audible voice output inside the driver's cab (3) from a machine database, and/or
- **in that** the adjustment device (9) is intended and configured to associate the text converted into an audible voice output inside the driver's cab (3) with satellite-based information.

11. Agricultural work machine (1) according to one of the preceding claims,
**characterized**
**in that** the adjustment device (9) is intended and configured to determine a name of the agricultural field (2) from a task management system and, based thereon, to determine a specific weather forecast in respect of that agricultural field (2) from a weather service, in order to associate the name of the agricultural field (2) and the related weather forecast with one another for the text converted into an audible voice output inside the driver's cab (3).

12. Agricultural work machine (1) according to one of the preceding claims,
**characterized**
**in that** the driver's cab (3) of the agricultural work machine (1) has at least one camera device (11) for capturing the driver identification (5) relating to the driver (4) who is in the driver's cab (3).

13. Agricultural work machine (1) according to one of the preceding claims,
**characterized**
- **in that** the driver identification (5) is a digital camera image, and/or
- **in that** the adjustment device (9) is intended and configured to use the digital camera image to determine an attentiveness of the driver (4) and to provide and/or adapt, in particular provide and/or adapt in a time-optimized manner, the audible voice output on the basis of this determined attentiveness.

14. Agricultural work machine (1) according to one of the preceding claims,
**characterized**
**in that** the adjustment device (9) is intended and configured to reduce the volume of and/or prevent other audible outputs from other acoustic sources inside the driver's cab (3) during the audible voice outputs from the automated voice system (6).

15. Data-based provision of adjustment parameters (8) pertaining to an agricultural work machine (1) according to one of the preceding claims and of associated driver identifications (5) for an adjustment device (9) of the agricultural work machine (1) for adjusting audible voice outputs from an automated voice system (6) of the agricultural work machine (1).

## Revendications

1. Machine de travail agricole (1) pour un usage agricole dans un champ agricole (2),
- avec une cabine de conduite (3) pour un conducteur (4) de la machine de travail agricole (1),
- la cabine de conduite (3) de la machine de travail agricole (1) étant prévue et mise au point pour détecter une identification de conducteur (5) par rapport à un conducteur (4) se trouvant dans la cabine de conduite (3),
- la cabine de conduite (3) comportant au moins un automate vocal (6), qui est prévu et est mis au point pour convertir un texte en une sortie vocale acoustique à l'intérieur de la cabine de conduite (3),
**caractérisée en ce**
**que** différents paramètres de réglage (8) de la machine de travail agricole (1) sont reliés à différentes identifications de conducteur (5) et mémorisés dans une mémoire de données (7), lesdits paramètres de réglage (8) comprenant des informations relatives à la machine de travail agricole (1), qui doivent être converties respectivement en une sortie vocale acoustique avec l'automate vocal (6),
- un dispositif de réglage (9) de la machine de travail agricole (1) étant prévu et mis au point pour effectuer une identification de conducteur (5) au moyen de la cabine de conduite (3) et pour déterminer les paramètres de réglage (8) qui y sont liés dans la mémoire de données (7) en fonction de ladite identification de conducteur (5) pour régler la machine de travail agricole (1) en fonction des paramètres de réglage (8) déterminés de telle manière que seuls des textes relatifs aux informations mémorisées dans le paramètre de réglage (8) déterminé sont convertis en sorties vocales acoustiques avec l'automate vocal (6).

2. Machine de travail agricole (1) selon la revendication 1,
**caractérisée en ce**
**que** le dispositif de réglage (9) est prévu et est mis au point pour régler automatiquement l'automate vocal (6) et d'autres composants de la machine de travail agricole (1).

3. Machine de travail agricole (1) selon la revendication 2,
**caractérisée en ce**
**qu'**un autre composant de la machine de travail agricole (1) est un dispositif de climatisation destiné à climatiser la cabine de conduite (3).

4. Machine de travail agricole (1) selon la revendication 2 ou 3,
**caractérisée en ce**
- **qu'**un autre composant de la machine de travail agricole (1) est une radio, et/ou
- **qu'**un autre composant de la machine de travail agricole (1) génère des informations pouvant être détectées visuellement et/ou haptiquement pour le conducteur (4).

5. Machine de travail agricole (1) selon l'une des revendications 2 à 4,
**caractérisée en ce**
- **qu'**un autre composant de la machine de travail agricole (1) est un dispositif de réglage de siège de conducteur pour régler un siège du conducteur ajustable,
- le siège de conducteur ajustable étant disposé dans la cabine de conduite (3).

6. Machine de travail agricole (1) selon l'une des revendications 2 à 5,
**caractérisée en ce**
- **qu'**un autre composant de la machine de travail agricole (1) est une affectation de touche d'un appareil d'entrée permettant au conducteur (4) de régler la machine de travail agricole (1),
- l'appareil d'entrée étant disposé dans la cabine de conduite (3).

7. Machine de travail agricole (1) selon l'une des revendications précédentes,
**caractérisée en ce**
- **que** le dispositif de réglage (9) est prévu et est mis au point pour régler la machine de travail agricole (1) en fonction de paramètres de fonctionnement détectés par la technologie des capteurs et d'informations de position par satellite, de telle manière que la machine de travail agricole (1) se déplace automatiquement le long d'un itinéraire prédéfini dans le champ agricole (2),
- seuls des textes relatifs aux informations mémorisées dans le paramètre de réglage (8) déterminé étant par ailleurs convertis en sorties vocales acoustiques avec l'automate vocal (6) pendant ledit état de fonctionnement de la machine de travail agricole (1).

8. Machine de travail agricole (1) selon l'une des revendications précédentes,
**caractérisée en ce**
- **que** le texte, qui est converti en une sortie vocale acoustique dans la cabine de conduite (3), est mémorisé pour le dispositif de réglage (9) dans une mémoire de données (7) dans la machine de travail agricole (1), et/ou
- **que** le texte, qui est converti en une sortie vocale acoustique dans la cabine de conduite (3), est mémorisé pour le dispositif de réglage (9) dans une mémoire de données à l'extérieur de la machine de travail agricole (1).

9. Machine de travail agricole (1) selon l'une des revendications précédentes,
**caractérisée en ce**
- **que** le texte, qui est converti en une sortie vocale acoustique dans la cabine de conduite (3), comprend plusieurs parties de texte, le dispositif de réglage (9) obtenant lesdites parties de texte à partir de plusieurs sources techniques de données, et/ou
- **que** le dispositif de réglage (9) est prévu et est mis au point pour générer le texte, qui est converti en une sortie vocale acoustique à l'intérieur de la cabine de conduite (3), à partir de plusieurs parties de texte, qui proviennent de plusieurs sources techniques de données.

10. Machine de travail agricole (1) selon l'une des revendications précédentes,
**caractérisée en ce**
- **que** le dispositif de réglage (9) est prévu et est mis au point pour obtenir le texte, qui est converti en une sortie vocale acoustique dans la cabine de conduite (3), d'un système de gestion de ferme selon une technique de données, et/ou
- **que** le dispositif de réglage (9) est prévu et est mis au point pour obtenir le texte, qui est converti en une sortie vocale acoustique dans la cabine de conduite (3), d'un système de gestion de tâches selon une technique de données, et/ou
- **que** le dispositif de réglage (9) est prévu et est mis au point pour obtenir le texte, qui est converti en une sortie vocale acoustique à l'intérieur de la cabine de conduite (3), d'un service météorologique selon une technique de données, et/ou
- **que** le dispositif de réglage (9) est prévu et est mis au point pour obtenir le texte, qui est converti en une sortie vocale acoustique dans la cabine de conduite (3), d'un manuel selon une technique de données, et/ou
- **que** le dispositif de réglage (9) est prévu et est mis au point pour obtenir le texte, qui est converti en une sortie vocale acoustique dans la cabine de conduite (3), d'une base de données de machine, et/ou
- **que** le dispositif de réglage (9) est prévu et est mis au point pour relier le texte, qui est converti en une sortie vocale acoustique dans la cabine de conduite (3), à des informations satellitaires.

11. Machine de travail agricole (1) selon l'une des revendications précédentes,
**caractérisée en ce**
**que** le dispositif de réglage (9) est prévu et est mis au point pour déterminer un nom du champ agricole (2) à partir d'un système de gestion de tâches et pour déterminer, sur cette base, une prévision météorologique spécifique à partir d'un service météorologique concernant ce champ agricole (2) afin d'obtenir, pour relier, pour le texte, qui est converti en une sortie vocale acoustique dans la cabine de conduite (3), le nom du champ agricole (2) et les prévisions météorologiques associées.

12. Machine de travail agricole (1) selon l'une des revendications précédentes,
**caractérisée en ce**
**que** la cabine de conduite (3) de la machine de travail agricole (1) comporte au moins un dispositif de caméra (11) pour détecter l'identification de conducteur (5) concernant le conducteur (4) se trouvant dans la cabine de conduite (3).

13. Machine de travail agricole (1) selon l'une des revendications précédentes,
**caractérisée en ce**
- **que** l'identification de conducteur (5) est une image de caméra numérique, et/ou
- **que** le dispositif de réglage (9) est prévu et est mis au point pour déterminer une attention du conducteur (4) au moyen de l'image de caméra numérique et pour réaliser et/ou adapter la sortie vocale acoustique en fonction de ladite attention déterminée, en particulier pour réaliser et/ou adapter celle-ci de manière optimisée dans le temps.

14. Machine de travail agricole (1) selon l'une des revendications précédentes,
**caractérisée en ce**
**que** le dispositif de réglage (9) est prévu et est mis au point pour réduire et/ou empêcher d'autres sorties acoustiques d'autres sources acoustiques dans la cabine de conduite (3) selon une technique de volume pendant les sorties acoustiques vocales de l'automate vocal (6).

15. Fourniture technique de paramètres de réglage (8) d'une machine de travail agricole (1) selon l'une des revendications précédentes et d'identifications de conducteur (5) liées pour un dispositif de réglage (9) de la machine de travail agricole (1) pour régler des sorties vocales acoustiques d'un automate vocal (6) de la machine de travail agricole (1).
